# EUROPEAN PATENT APPLICATION

(11) **EP 1 714 781 A1**
(43) Date of publication of application: **25.10.2006**
(21) Application number: 05704186.5
(22) Date of filing: 27.01.2005
(51) Int. Cl.: B32B 27/34

(54) **MULTILAYERED POLYAMIDE FILM**

(30) Priority: 30.01.2004 JP 2004024242; 30.01.2004 JP 2004024243
(71) Applicant: MITSUBISHI PLASTICS INC., Chiyoda-ku, Tokyo 100-0005 (JP)
(72) Inventor: NAKAMURA, Kenji2c/o MITSUBISHI PLASTICS, INC., Chiyoda-ku, Tokyo 1000005 (JP); MIYASHITA, Kazuhisa c/o MITSUBISHI PLASTICS, INC., Chiyoda-ku, Tokyo 1000005 (JP); HATA, Hiroshi c/o MITSUBISHI PLASTICS, INC., Chiyoda-ku, Tokyo 1000005 (JP); ISHII, Kazuhide c/o MITSUBISHI PLASTICS, INC., Chiyoda-ku, Tokyo 1000005 (JP); SUGIYAMA, Masayoshi c/o MITSUBISHI PLASTICS, INC., Chiyoda-ku, Tokyo 1000005 (JP)
(74) Representative: Gille Hrabal Struck Neidlein Prop Roos
(86) International application number: PCT/JP2005/001080
(87) International publication number: WO 2005/072962

(57) **Abstract**

There is provided a polyamide-based laminated film with a multi-layered structure including 5 or more layers, comprising (a) an aromatic polyamide layer, (b) an aliphatic polyamide layer and (c) a layer made of a mixture containing an aromatic polyamide and an aliphatic polyamide at a weight ratio of 5:95 to 20:80, said layer (c) being disposed adjacent to the layer (a) and/or the layer (b), and said film having 5 or less pinholes per 497 cm² as measured after subjecting the film to 3000 cycles of repeated flexing operation at a temperature of 23°C and a relative humidity of 50%, using a Gelboflex tester. The polyamide-based laminated film is free from interlaminar peeling between the aliphatic polyamide layer and the aromatic polyamide layer, and can exhibit excellent properties including an oxygen gas-barrier property, a flex/pinhole resistance, a transparency, a heat resistance and a toughness. The polyamide-based laminated film in which at least one layer of the film is a polyamide-based resin layer containing a hindered phenol-based antioxidant in an amount of 0.01 to 0.5% by weight, and a thickness of the polyamide-based resin layer is 10% or more but less than 80% of a whole thickness of the film, the resultant laminated film is further excellent in hydrothermal resistance and adhesion to other plastic films and, therefore, can be suitably used as a packaging material for foods, medical products and drugs or chemicals which tend to be deteriorated in quality upon exposure to oxygen.

## Description

### TECHNICAL FIELD

The present invention relates to polyamide-based laminated films which are excellent in not only oxygen gas-barrier property, flex resistance, transparency, heat resistance and toughness but also hydrothermal resistance and adhesion to other plastic films, and can be suitably used as a packaging material for foods, medical products and drugs or chemicals which tend to be deteriorated in quality upon exposure to oxygen.

### BACKGROUND ART

Conventionally, films made of polyamide-based resins have been used singly or in the form of a laminate with other films in various ordinary packaging applications. These films respectively have not only advantages but also disadvantages and, therefore, have been selectively used according to the aimed purposes or applications thereof.

For example, films made of an aliphatic polyamide are excellent in mechanical properties such as tensile strength and flex resistance, but when used in retort applications, packaging bags produced from these films tend to frequently suffer from tearing or breaking owing to accelerated deterioration thereof during the retorting. For this reason, there have been proposed films containing an antioxidant (Patent Document 1 and Patent Document 2). However, when the antioxidant is blended in a whole part of the films, there arise problems such as high costs. On the contrary, when the content of the antioxidant is reduced, the films tend to be deteriorated in hydrothermal resistance.

In addition, the films made of an aliphatic polyamide are excellent in mechanical properties such as tensile strength and flex/pinhole resistance, but fail to exhibit a sufficient oxygen gas-barrier property. In consequence, there have been proposed and practically used the vinylidene chloride-based resin-coated films to which an oxygen gas-barrier property imparted by coating a surface of the aliphatic polyamide film with a vinylidene chloride-based polymer latex to impart. However, the vinylidene chloride-based resin-coated films tend to suffer from white turbidity when subjected to hydrothermal treatment, resulting in disadvantages such as extremely limited application fields thereof. Further, when the films are incinerated upon disposal, chlorine-containing compounds are generated therefrom, thereby causing environmental pollution, etc.

On the other hand, as the films having a good oxygen gas-barrier property, there have been proposed films made of an aromatic polyamide such as typically those containing xylylenediamine as a constitutional unit thereof. These films are excellent in transparency and oil resistance, but tend to be deteriorated in flex resistance, also resulting in limited application fields thereof.

Therefore, in order to obtain films having advantages of both of the above aliphatic and aromatic polyamide films, namely such films which are excellent in all of tensile strength, flex resistance and oxygen gas-barrier property, there have been proposed the process for producing a laminated film by an inflation molding method in which the above two kinds of polyamides are melted and co-extruded together (Patent Document 3), and the laminated film having such a layer structure in which a layer mainly made of an aromatic polyamide is interposed between layers each mainly made of an aliphatic polyamide (Patent Document 4). In addition, in order to improve a flex resistance, etc., there have been many methods of adding a polyamide elastomer component to films (Patent Document 5 , Patent Document 6 and Patent Document 7).

The above conventional laminated films tend to be improved in flex resistance and toughness owing to contribution of the aliphatic polyamide layer and in oxygen gas-barrier property owing to contribution of the aromatic polyamide layer, but fail to satisfy a good flex resistance and a good oxygen gas-barrier property as well as an interlaminar adhesion strength sufficient to prevent occurrence of interlaminar peeling between layers thereof during use, at the same time. Further, in the case where scraps produced during the process for production of these films are regenerated and reused, since the aliphatic polyamide and the aromatic polyamide are mixed with each other, the inherent properties of the respective raw materials such as oxygen gas-barrier property and flex resistance tend to be deteriorated, so that the resultant laminated films fail to exhibit intended functions in some cases.

More specifically, for the purpose of obtaining laminated films having both of a good oxygen gas-barrier property, and good flex resistance and toughness, an intermediate layer made of an aromatic polyamide may be interposed between opposite outer layers each made of an aliphatic polyamide solely. However, such laminated films tend to suffer from peeling at a boundary between the aromatic polyamide layer and the aliphatic polyamide layer, and bags produced therefrom tend to suffer from tearing or breaking during use. To solve this problem, the aromatic polyamide or scraps made of a mixture of the aromatic polyamide and the aliphatic polyamide are mixed in the aliphatic polyamide layer to enhance an interlaminar adhesion strength between respective layers of the laminated films. However, such laminated films tend to be considerably deteriorated in flex/pinhole resistance.

The laminated films described in Patent Document 3 and Patent Document 4 exhibit a good heat resistance and are used for packaging retort foods which are treated in a packaged state in hot water heated to about 100°C. However, the laminated films tend to suffer from oxidative deterioration when subjected to high-retort treatment conducted under an atmosphere including an oxygen-containing air and a steam having a high temperature exceeding 120°C, resulting in tearing or breaking of bags produced therefrom owing to deteriorated strength of the films themselves. This phenomenon is caused by oxidative deterioration of the polyamide due to a mixed gas composed of oxygen in air and steam which is present in an oven upon retorting. Retort treatments are usually conducted under pressure using a compressor in order to prevent occurrence of tearing or breaking of bag-packaged products. Under such a condition, air tends to be introduced into the retorting oven, thereby causing oxidative deterioration of the films.

Thus, it is known that the films produced using an aromatic polyamide as a raw material exhibit a high resistance to oxidative deterioration as compared to those films produced from an aliphatic polyamide. However, films made of an aliphatic polyamide solely or a mixed resin of an aromatic polyamide and an aliphatic polyamide, or laminated films including an aliphatic polyamide film, tend to suffer from oxidative deterioration of their portions containing the aliphatic polyamide when exposed to high-temperature steam containing air, resulting in tearing or breaking of bags produced therefrom.
Patent Document 1 : Japanese Patent No. 2917401
Patent Document 2 : Japanese Patent Application Laid-open No. 313321/2003
Patent Document 3 : Japanese Patent Application Laid-open No. 51427/1982
Patent Document 4 : Japanese Patent Application Laid-open No. 155762/1981
Patent Document 5 : Japanese Patent Application Laid-open No. 255054/1994
Patent Document 6 : Japanese Patent Application Laid-open No. 224844/1996
Patent Document 7 : Japanese Patent Application Laid-open No. 254615/1999

### DISCLOSURE OF THE INVENTION

An object of the present invention is to provide a polyamide-based laminated film which is free from the above problems encountered in the prior art, and can be prevented from undergoing interlaminar peeling between an aliphatic polyamide layer and an aromatic polyamide layer and is excellent in not only oxygen gas-barrier property, flex resistance, transparency, heat resistance and toughness but also hydrothermal resistance and adhesion to other plastic films.

As a result of intensive and extensive researches to achieve the above object, the inventors have found that the polyamide-based laminated film having a multi-layered structure including 5 or more layers in which an adhesive layer made of a mixture containing an aliphatic polyamide and an aromatic polyamide at a specific ratio is disposed adjacent to an aliphatic polyamide layer and/or an aromatic polyamide layer, can exhibit excellent properties which are well-balanced between gas-barrier property, flex resistance and interlaminar peel strength between respective layers thereof, and further the polyamide-based laminated film including at least one polyamide-based resin layer containing a hindered phenol-based antioxidant whose thickness is adjusted to a specific range, is excellent in hydrothermal resistance and adhesion to other plastic films. The present invention has been accomplished on the basis of the above findings.

Thus, the present invention provides:
(1) A polyamide-based laminated film with a multi-layered structure including 5 or more layers, comprising (a) an aromatic polyamide layer, (b) an aliphatic polyamide layer and (c) a layer made of a mixture containing an aromatic polyamide and an aliphatic polyamide at a weight ratio of 5:95 to 20:80, said layer (c) being adjacent to the layer (a) and/or the layer (b), and said film having 5 or less pinholes per 497 cm² as measured after subjecting the film to 3000 cycles of repeated flexing operation at a temperature of 23°C and a relative humidity of 50%, using a Gelboflex tester.
(2) The polyamide-based laminated film according to the above aspect (1), wherein said film has a multi-layered structure in which the layer (b), the layer (c) and the layer (a) are sequentially laminated on each other in this order.
(3) The polyamide-based laminated film according to the above aspect (2), wherein said film has a multi-layered structure in which the layer (b), the layer (c), the layer (a), the layer (c) and the layer (b) are sequentially laminated on each other in this order.
(4) The polyamide-based laminated film according to any one of the above aspects (1) to (3), wherein said film comprises two or more layers (c) having different compositions from each other.
(5) The polyamide-based laminated film according to any one of the above aspects (1) to (4), wherein the layer (a) contains a flex/pinhole resistance modifying agent in an amount of 0.1 to 10% by weight.
(6) The polyamide-based laminated film according to the above aspect (5), wherein the layer (c) and/or the layer (b) contain a flex/pinhole resistance modifying agent in an amount of 0.1 to 10% by weight.
(7) The polyamide-based laminated film according to any one of the above aspects (1) to (6), wherein the film is a monoaxially or multi-axially stretched film which is stretched at a stretch ratio of 2 to 8 times in at least one direction thereof.
(8) The polyamide-based laminated film according to the above aspect (7), wherein the film is a biaxially stretched film which is stretched at a stretch ratio of 2.5 to 5 times in each of longitudinal and lateral directions thereof.
(9) The polyamide-based laminated film according to any one of the above aspects (1) to (8), wherein the layer (a) is an aromatic polyamide layer containing the aliphatic polyamide in an amount of 0 to 5% by weight.
(10) The polyamide-based laminated film according to any one of the above aspects (1) to (9), wherein the layer (b) is an aliphatic polyamide layer containing the aromatic polyamide in an amount of 0 to 5% by weight.
(11) The polyamide-based laminated film according to any one of the above aspects (1) to (10), wherein at least one layer of the film is a polyamide-based resin layer containing a hindered phenol-based antioxidant in an amount of 0.01 to 0.5% by weight, and a thickness of the polyamide-based resin layer is 10% or more but less than 80% of a whole thickness of the film.
(12) The polyamide-based laminated film according to the above aspect (11), wherein the hindered phenol-based antioxidant is at least one compound selected from the group consisting of N,N'-hexamethylenebis(3,5-di-t-butyl-4-hydroxy-hydrocinnamide), 3,5-di-t-butyl-4-hydroxy-benzylphosphonate-diethyl ester, 1,3,5-trimethyl-2,4,6-tris(3,5-di-t-butyl-4-hydroxy-benzyl)benzene and pentaerythrityl-tetrakis[3-(3,5--di-t-butyl-4-hydroxyphenyl)propionate].
(13) The polyamide-based laminated film according to the above aspect (11) or (12), wherein the polyamide-based resin layer containing the hindered phenol-based antioxidant is made of nylon-6 and/or nylon-66.
(14) The polyamide-based laminated film according to any one of the above aspects (1) to (13), wherein in addition to the layers (a), (b) and (c), the film further comprises (d) a layer made of a saponified ethylene-vinyl acetate copolymer.

### PREFERRED EMBODIMENTS FOR CARRYING OUT THE INVENTION

The present invention is described in detail below.

The polyamide-based laminated film of the present invention is made of an aromatic polyamide (A) and an aliphatic polyamide (B) as main raw materials constituting the layers (a) to (c), and, if required, a flex/pinhole resistance modifying agent (C) and a hindered phenol-based antioxidant (D). Further, as a raw material of a layer (d) which may be optionally formed in the laminated film, there may be used a saponified ethylene-vinyl acetate copolymer (E).

### (A) Aromatic Polyamide

The aromatic polyamide (A) used in the present invention is a polyamide having an aromatic ring, and suitably contains a polyamide constitutional unit composed of xylylenediamine and α,ω-aliphatic dicarboxylic acid having 6 to 12 carbon atoms in an amount of 70 mol% or higher in a molecular chain thereof, although not particularly limited thereto. The aromatic polyamide containing such a polyamide constitutional unit in an amount of 70 mol% or higher serves for imparting a high gas-barrier property to the resultant film.

Specific examples of the polyamide constitutional component composed of xylylenediamine and α,ω-aliphatic dicarboxylic acid having 6 to 12 carbon atoms include homopolymers such as poly-m-xylylene adipamide, poly-m-xylylene pimelamide, poly-m-xylylene azelamide, poly-p-xylylene azelamide and poly-p-xylylene decanamide, and copolymers such as m-xylylene/p-xylylene adipamide copolymers, m-xylylene/p-xylylene pimelamide copolymers, m-xylylene/p-xylylene azelamide copolymers and m-xylylene/p-xylylene sebacamide copolymers.

Examples of the polyamide constitutional components other than those described above include nylon salts of diamines and dicarboxylic acids, ring-opened polymers of lactams such as ε-caprolactam, and self-polycondensates of ω-aminocarboxylic acids such as ε-aminocarboxylic acid. Specific examples of the diamines as a component of the nylon salts include aliphatic diamines such as hexamethylenediamine and 2,2,4-trimethylhexamethylenediamine, and heterocyclic or heteroatom-containing diamines such as piperadine bispropylamine and neopentyl glycol bispropylamine. Specific examples of the dicarboxylic acids as a component of the nylon salts include aliphatic dicarboxylic acids such as adipic acid, azelaic acid and sebacic acid, aromatic dicarboxylic acids such as terephthalic acid and isophthalic acid, and cyclic aliphatic dicarboxylic acids such as 1,4-cyclohexanedicarboxylic acid.

Specific examples of the aromatic polyamide include homopolymers such as poly-m-xylyleneadipamide, poly-m-xylylenepimelamide, poly-m-xylyleneazelamide, poly-p-xylyleneazelamide, poly-p-xylylenedecanamide, polyhexamethyleneterephthalamide and polyhexamethyleneisophthalamide, and copolymers such as m-xylylene/p-xylyleneadipamide copolymers, m-xylylene/p-xylylenepimelamide copolymers, m-xylylene/p-xylyleneazelamide copolymers, m-xylylene/p-xylylenesebacamide copolymers and polyhexamethyleneterephthalamide/isophthalamide copolymers.

### (B) Aliphatic Polyamide

The aliphatic polyamide (B) used in the present invention may include ring-opened polymers of cyclic lactams, self-polycondensates of aminocarboxylic acids, polycondesates of dicarboxylic acids and diamines, etc.

Examples of the aliphatic polyamide in the form of a copolyamide composed mainly of ε-caprolactam include nylon salts of aliphatic diamines and aliphatic dicarboxylic acids. Examples of the aliphatic polyamide in the form of a copolyamide composed mainly of hexamethyleneadipamide include copolymerizable compounds, e.g., lactams such as ε-caprolactam.

Specific examples of the aliphatic diamines constituting the nylon salts include ethylenediamine, tetramethylenediamine, pentamethylenediamine, hexamethylenediamine, octamethylenediamine and decamethylenediamine. Specific examples of the aliphatic dicarboxylic acids constituting the nylon salts include adipic acid, sebacic acid, cork acid, glutaric acid, azelaic acid, β-methyladipic acid, decamethylenedicarboxylic acid, dodecamethylenedicarboxylic acid and pimelic acid.

Among these aliphatic polyamides, a homopolymer of ε-caprolactam referred to as nylon-6 and polyhexamethyleneadipamide referred to as nylon-66 are more preferred in view of inexpensiveness, good availability and susceptibility to smooth biaxially stretching procedure.

### (C) Flex/Pinhole Resistance Modifying Agent

The polyamide-based laminated film of the present invention can be further enhanced in flex/pinhole resistance by adding a flex/pinhole resistance modifying agent (C) thereto.

Examples of the flex/pinhole resistance modifying agent (C) include polyolefins, polyamide elastomers and polyester elastomers.

The polyolefins contain a polyethylene unit and a polypropylene unit in a main chain thereof in an amount of 50% by weight or more, and may be graft-modified with maleic anhydride, etc. Examples of the constitutional units other than the polyethylene unit and the polypropylene unit include vinyl acetate and partially saponified products thereof; acrylic acid, methacrylic acid, acrylic esters, methacrylic esters and partially metal-neutralized products thereof (ionomers); 1-alkenes such as butene; alkadienes; and styrene. The polyolefins may contain a plurality of these constitutional units.

Also, the polyamide elastomers are those compounds belonging to polyamide-based block copolymers such as polyether amides and polyether ester amides. Examples of the amide component of the polyamide elastomers include nylon-6, nylon-66 and nylon-12. Examples of the ether component of the polyamide elastomers include polyoxytetramethylene glycol, polyoxyethylene glycol and polyoxy-1,2-propylene glycol. The polyamide elastomers are preferably in the form of a copolymer mainly composed of polytetramethylene glycol and polylauryl lactam (nylon-12). In addition, the polyamide elastomers may also contain a small amount of a dicarboxylic acid such as dodecanedicarboxylic acid, adipic acid and terephthalic acid as an optional component.

Examples of the polyester elastomers include polyether ester elastomers composed of combination of polybutylene terephthalate and polytetramethylene glycol, and polyester ester elastomers composed of combination of polybutylene terephthalate and polycaprolactone.

These flex/pinhole resistance modifying agents may be used alone or in the form of a mixture of any two or more thereof.

### (D) Hindered Phenol-based Antioxidant

In the present invention, at least one polyamide layer of the laminated film may contain a hindered phenol-based antioxidant (D) to impart excellent hydrothermal resistance and adhesion to other plastic films thereto, thereby allowing the resultant laminated film to be suitably applied to retort foods, etc.

In the present invention, as the hindered phenol-based antioxidant (D), there may be suitably used conventionally known polyamide-based resins. Specific examples of the hindered phenol-based antioxidant include N,N'-hexamethylenebis(3,5-di-t-butyl-4-hydroxy-hydrocinnamide), 3,5-di-t-butyl-4-hydroxy-benzylphosphonate-diethyl ester, 1,3,5-trimethyl-2,4,6-tris(3,5-di-t-butyl-4-hydroxy-benzyl)benzene, pentaerythrityl-tetrakis[3-(3,5-di-t-butyl-4-hydroxyphenyl)propionatel, tetrakis(2,4-di-t-butylphenyl)-4.4'-biphenylene-di-phosphonite and triethylene glycol-bis-3-(3-t-butyl-4-hydroxy-5-methyl-phenyl)propionate.

In particular, when the laminated film of the present invention is to be used in food-packaging applications, among these hindered phenol-based antioxidants, preferred is at least one compound selected from the group consisting of N,N'-hexamethylenebis(3,5-di-t-butyl-4-hydroxy-hydrocinnamide), 3,5-di-t-butyl-4-hydroxy-benzylphosphonate-diethyl ester, 1,3,5-trimethyl-2,4,6-tris(3,5-di-t-butyl-4-hydroxy-benzyl)benzene and pentaerythrityl-tetrakis[3-(3,5-di-t-butyl-4-hydroxyphenyl)propionatel.

### (Polyamide-based Laminated Film)

The layer (a) of the polyamide-based laminated film according to the present invention is mainly made of the aromatic polyamide (A), and may also contain an aliphatic polyamide in an amount of 0 to 5% by weight, for example, when reusing scraps generated during the film production process. Further, the layer (a) may also contain the above flex/pinhole resistance modifying agent in an amount of 0.1 to 10% by weight and preferably 1 to 5% by weight in order to enhance a flex/pinhole resistance thereof.

The layer (b) of the polyamide-based laminated film is mainly made of the aliphatic polyamide (B), and may also contain an aromatic polyamide in an amount of 0 to 5% by weight. Although the flex/pinhole resistance modifying agent is mainly contained in the layer (a), the layer (b) may also contain the flex/pinhole resistance modifying agent in order to further enhance the flex/pinhole resistance of the resultant laminated film.

The polyamide-based laminated film according to the present invention further includes the layer (c) made of a mixture of the aromatic polyamide and the aliphatic polyamide.

The above mixture is a uniform composition composed of a mixture of the aromatic polyamide and the aliphatic polyamide. The composition may be obtained by simply mixing the raw aromatic polyamide with the raw aliphatic polyamide, may be a mixture of the raw polyamides produced as out-of-specification films or cut end materials (trims), or may be prepared by further adding the respective raw polyamides to the above mixture of the raw polyamides.

The composition (mixing ratio) of the layer (c) may be determined such that the weight ratio of the aromatic polyamide to the aliphatic polyamide is in the range of from 5:95 to 20:80 and preferably from 10:90 to 15:85. The layer (c) is laminated adjacent to the above layer (a) and/ or layer (b). By providing the layer made of a mixture containing the polyamides at the above compositional ratio, the resultant laminated film can be improved in adhesion to the layer (a) or the layer (b), and can exhibit excellent flex resistance and toughness.

Meanwhile, in the polyamide-based laminated film, the layer (c) may be constituted from 2 or more layers which are different in compositions of the aromatic polyamide (A) and the aliphatic polyamide (B) from each other. When the layer (c) is constituted from 2 or more layers having different compositions from each other, the respective layers (c) may be laminated adjacent to each other, or may be laminated through the layer (a) or the layer (b). When the two or more layers (c) having different compositions from each other are laminated adjacent to each other, the adjacent layers (c) may be regarded as a single integral layer (c).

The aromatic polyamide (A), the aliphatic polyamide (B) and the composition made of a mixture of the polyamides (A) and (B) used as the raw materials upon producing the polyamide-based laminated film of the present invention exhibit a high moisture absorption. If the moisture-absorbed raw materials are melted and extruded under heating, water vapor or oligomers tend to be generated, thereby inhibiting formation of films. Therefore, these raw materials are preferably previously dried to adjust a water content thereof to 0.1% by weight or lower. Meanwhile, when the polyamide-based laminated film is produced from the raw polyamides or the polyamide composition, various additives such as lubricants, antistatic agents, antioxidants, anti-blocking agents, stabilizers, dyes, pigments and inorganic fine particles may be added thereto unless the addition thereof adversely affects properties of the resultant film.

Thus, the laminated film of the present invention has a multi-layered structure including at least 5 layers which is constituted from the layer (a) mainly made of the aromatic polyamide (A), the layer (b) mainly made of the aliphatic polyamide (B) and the layer (c) made of a mixture of the aromatic polyamide (A) and the aliphatic polyamide (B).

When the flex/pinhole resistance modifying agent (C) is added to the layer (a), and further the layer (b) and/or the layer (c), in an amount of 0.1 to 10% by weight, so that the resultant film can be further enhanced in flex/pinhole resistance. When the content of the flex/pinhole resistance modifying agent in the respective polyamide resin layers exceeds 10% by weight, the effect of improving the flex/pinhole resistance by addition of the modifying agent tend to be substantially saturated, and the resultant film rather tends to be deteriorated in transparency.

The layer (a) and the layer (b) containing a given amount of the flex/pinhole resistance modifying agent (C) may be formed from either a mixture obtained by dry-blending the aromatic polyamide (A) or the aliphatic polyamide (B) with the flex/pinhole resistance modifying agent (C) at a given mixing ratio, or pellets obtained by melt-extruding the dry-blended mixture and pelletizing the extruded mixture. In addition, the composition for the layer (c) which contains the flex/pinhole resistance modifying agent (C) may be prepared in the same manner as described above.

When the polyamide-based laminated film is used in the applications requiring excellent hydrothermal resistance and adhesion to other plastic films such as retort foods, at least one of the layers of the laminated film is preferably constituted from a polyamide-based resin layer containing the hindered phenol-based antioxidant (D) in an amount of 0.01 to 0.5% by weight, and a thickness of the polyamide resin layer is preferably controlled to 10 to 80% of a whole thickness of the laminated film.

The hindered phenol-based antioxidant (D) is more preferably contained in an outermost polyamide-based resin layer of the laminated film. In such a polyamide-based laminated film, since most of oxygen penetrated is absorbed and captured by the outermost layer, it is not usually required that the layers other than the outermost layer contain the hindered phenol-based antioxidant. However, in order to further enhance the oxygen gas-barrier property of the laminated film, the antioxidant may also be contained in the other layers.

When at least one layer of the laminated film contains the hindered phenol-based antioxidant in an amount of 0.01 to 0.5% by weight, the resultant laminated film, when subjected to hydrothermal treatment, can be prevented from undergoing disadvantages such as breaking due to oxidative deterioration thereof, occurrence of bleed-out of the antioxidant onto a surface of the laminated film and poor compatibility with printing inks or adhesives. The polyamide-based laminated film is usually laminated on the other plastic film, e.g., a sealant film, through an adhesive layer. In this case, when the antioxidant is bled out, the film tends to suffer from interlaminar peeling at a boundary between the layers. The content of the antioxidant in the respective layers of the laminated film is preferably in the range of from 0.03 to 0.2% by weight.

Also, when the thickness of the polyamide-based resin layer containing the hindered phenol-based antioxidant (D) is adjusted to 10 to 80% of the whole thickness of the laminated film, the resultant laminated film, when subjected to hydrothermal treatment, can be prevented from undergoing breaking due to oxidative deterioration thereof, and is advantageous in costs.

The polyamide containing a given amount of the hindered phenol-based antioxidant may be produced by any of the method of adding the antioxidant upon initiation of polymerization for production of the polyamide, or during and after the polymerization, and the method of dry-blending the respective components with each other at a given mixing ratio.

In the present invention, when the hindered phenol-based antioxidant is added to an outer layer containing nylon-6 and/or nylon-66, the above effects due to the addition thereof can be more remarkably exhibited.

Typical examples of the layer structure of the polyamide-based laminated film which is constituted from the layers (a) mainly made of the aromatic polyamide (A), the layer (b) mainly made of the aliphatic polyamide (B) and the layer (c) made of a mixture of the aromatic polyamide (A) and the aliphatic polyamide (B) are as follows. However, these layer structures of the laminated films are only illustrative and not intended to limit the invention thereto.
(1) Examples of 5-layered structure:
   (b)/(c)/(a)/(c)/(b);
   (b)/(c)/(a)/(c)/(a);
   (c)/(b)/(c)/(a)/(c); and
   (b)/(c)/(a)/(c)/(c).
(2) Examples of 6-layered structure:
   (b)/(c)/(a)/(c)/(c)/(b); and
   (b)/(c)/(a)/(c)/(b)/(b).
(3) Examples of 7-layered structure:
   (b)/(c)/(c)/(a)/(c)/(c)/(b);
   (b)/(b)/(c)/(a)/(c)/(b)/(b);
   (c)/(b)/(c)/(a)/(c)/(b)/(c); and
   (b)/(c)/(a)/(c)/(a)/(c)/(b).

The thickness ratio between the respective layers of the above-illustrated laminated films is preferably adjusted such that a total thickness of the layers (a) is from 8 to 40% of the whole thickness of the respective laminated films; a total thickness of the layers (b) is from 5 to 70% of the whole thickness of the respective laminated films; and a total thickness of the layers (c) is from 3 to 40% of the whole thickness of the respective laminated films.

Meanwhile, the polyamide-based laminated film of the present invention may further include, in addition to the above layers (a), (b) and (c), a layer (d) made of a saponified ethylene-vinyl acetate copolymer (EVOH), if required.

### (Process for Production of Polyamide-based Laminated Film)

The polyamide-based laminated film of the present invention may be produced by conventionally known ordinary methods. That is, first, the raw materials including the aromatic polyamide (A), the aliphatic polyamide (B), etc., may be usually co-extruded to obtain a substantially amorphous non-oriented laminated film (hereinafter referred to as a "unstretched laminated film"). The unstretched laminated film may be suitably produced, for example, by such a co-extrusion method in which the above raw materials are melted in 2 to 5 extruders, extruded therefrom through a flat die or a circular die, and then rapidly cooled to obtain a flat or circular unstretched laminated film.

Next, the above unstretched laminated film is stretched in at least one direction of the film delivery direction (longitudinal direction) and the direction perpendicular to the film delivery direction (lateral direction) at a stretch ratio of usually 2 to 8 times and preferably in the biaxial directions including both of the longitudinal and lateral directions at a stretch ratio of 2.5 to 5 times for each direction. When the stretch ratio in each of the biaxial longitudinal and lateral directions is less than 2.5 times, the resultant laminated film tends to be deteriorated in strength owing to a less stretching effect. On the other hand, when the stretch ratio in each direction is more than 5 times, the laminated film tends to suffer from tearing or breaking upon stretching. Therefore, the upper limit of the stretch ratio of the laminated film is preferably within the above-specified range.

The biaxial stretching of the laminated film may be conducted by any known methods such as tenter-type sequential biaxial stretching, tenter-type simultaneous biaxial stretching and tubular-type simultaneous biaxial stretching unless the use of these methods is departed from the scope of the present invention. For example, in the tenter-type sequential biaxial stretching method, the unstretched laminated film is heated to a temperature range of from 50 to 110°C, stretched from 2.5 to 5 times in the longitudinal direction using a roll-type longitudinal stretching machine, and then successively stretched from 2.5 to 5 times in the lateral direction using a tenter-type lateral stretching machine within a temperature range of 60 to 140°C, thereby obtaining the biaxially stretched polyamide-based laminated film of the present invention. On the other hand, in the tenter-type simultaneous biaxial stretching method or the tubular-type simultaneous biaxial stretching method, the unstretched laminated film is simultaneously stretched in both the longitudinal and lateral directions at a stretch ratio of 2.5 to 5 times, for example, within a temperature range of 60 to 130°C, thereby obtaining the biaxially stretched polyamide-based laminated film of the present invention.

The biaxailly stretched laminated film thus obtained by the above methods is successively subjected to heat treatment. With the heat treatment, a good dimensional stability at an ordinary temperature can be imparted to the laminated film. In this case, the heat-treating temperature may be selected from the range of from 110°C as a lower limit to the upper limit temperature lower by 5°C than a melting point of the respective polyamides, thereby obtaining a stretched film having a good dimensional stability at an ordinary temperature and an optional heat shrinkage rate. The biaxially stretched laminated film which is fully thermally fixed by the heat treatment may be cooled and wound up into a roll by ordinary methods.

The polyamide-based laminated film of the present invention which may be produced by the above methods preferably exhibits the following properties in view of the aimed objects of the present invention. That is, the polyamide-based laminated film preferably has an oxygen permeability of 15 cm³/m²·24 h·atom or lower as measured at a temperature of 23°C and a relative humidity of 50%, 5 or less pinholes per 496 cm² (77 inch²) as measured after subjecting the film to 3000 cycles of repeated flexing operation at a temperature of 23°C and a relative humidity of 50% using a Gelboflex tester, a haze of 10% or less, and an interlaminar peel strength of 150 g/15 mm or higher.

The whole thickness of the polyamide-based laminated film according to the present invention is preferably 10 to 40 µm. The resultant laminated film having a whole thickness of less than 10 µm tends to be ill-balanced between oxygen gas-barrier property and flex/pinhole resistance thereof, and tends to become insufficient in abrasion resistance, thereby failing to obtain a film satisfactorily usable in packaging applications. On the other hand, when the whole thickness exceeds 40 µm, the resultant laminated film tends to become hard. In addition, when a sealant layer is further laminated on such a thick film, the obtained laminated film tends to have a very large thickness as a whole and, therefore, become unsuitable for soft packaging purposes. Also, the polyamide-based laminated film of the present invention on which the sealant layer is laminated may be subjected to further processing steps. The thus obtained laminated film may be further laminated with a coating layer made of a vinylidene chloride-based resin, a polyvinyl alcohol-based resin, a saponified ethylene-vinyl acetate copolymer-based resin, etc., to obtain a laminated film having a still further enhanced gas-barrier property and an excellent flex/pinhole resistance. In addition, a laminate obtained by further laminating various other single layers or various other laminated films on the laminated film of the present invention by various laminating methods such as dry-lamination, wet-lamination and extrusion-lamination, can also show an excellent flex/pinhole resistance.

In the present invention, in the case where the hindered phenol-based antioxidant (D) is incorporated into at least any one of the layers of the laminated film, three kinds of raw materials including, for example, an aromatic polyamide, an aliphatic polyamide containing the hindered phenol-based antioxidant, and a mixture of the aromatic polyamide and the aliphatic polyamide which contains the hindered phenol-based antioxidant, are first co-extruded to produce a substantially amorphous non-oriented unstretched laminated film. In this case, an adhesive layer made of a maleic anhydride-modified polyolefin, an ethylene-(meth)acrylic acid copolymer, an ionomer resin, etc., may be provided between the respective three layers, if required.

Thus, when the hindered phenol-based antioxidant (D) is contained in at least any one of the layers of the laminated film, the resultant film can be prevented from suffering from deterioration of properties thereof even upon being subjected to severe hydrothermal treatments in such an atmosphere including oxygen and steam heated to about 125°C.

Meanwhile, upon production of the laminated film, out-of-specification films or cut end materials (trims) tend to be generated. In the case of the laminated film of the present invention wherein the hindered phenol-based antioxidant is contained in at least any one of the layers thereof, the materials regenerated from these scraps can still maintain a good oxygen gas-barrier property, a good flex resistance, etc., upon reuse thereof. Therefore, when these scraps of the laminated film are recycled and reused, economical advantages and effective utilization of the resources can be achieved.

Further, the polyamide-based laminated film of the present invention may also be used in the form of a laminate with other plastic films such as stretched or unstretched films made of, for example, polyethylene, chain-like low-density polyethylene, polypropylene, polyethylene terephthalate, etc., and further with papers, etc. The thus obtained laminates may also be suitably used in various packaging applications.

### EXAMPLES

The contents and effects of the present invention are described in more detail by referring to the following examples. However, it should be noted that these examples are only illustrative and not intended to limit the invention thereto.

Meanwhile, a laminated film having an outermost layer containing a hindered phenol-based antioxidant is shown in the below-mentioned Reference Example.

The respective layers of the laminated film are represented by the following symbols.
(a) Aromatic polyamide layer;
(b) Aliphatic polyamide layer;
(b') Aliphatic polyamide layer containing a hindered phenol-based antioxidant; and
(c) Layer made of a mixture of the aromatic polyamide and the aliphatic polyamide.

In the following examples, comparative examples and reference example, various properties of the obtained films were evaluated by the following methods.

### 1) Oxygen Permeability (cm³/m²·24 h·atom)

The oxygen permeability was measured using an oxygen permeability measuring apparatus "OXY-TRAN 100 Model" available from Modern Control Inc., at a temperature of 23°C and a relative humidity of 50%.

Meanwhile, an oxygen permeability of the laminated film having an outermost layer containing a hindered phenol-based antioxidant (D) was measured using the same measuring apparatus as used above at a temperature of 25°C and a relative humidity of 65%.

### 2) Flex/Pinhole Resistance (number of pinholes per 496 cm² (= 77 inch²))

A film was cut into a size of 20.3 cm x 27.9 cm, and allowed to stand at a temperature of 23°C and a relative humidity of 50% for 24 h or longer for conditioning thereof, and then subjected to repeated flex test using a Gelboflex tester "No. 901 Model" (according to the standard of MIL-B-131C) available from Rigaku Kogyo Co., Ltd., by the following method to count the number of pinholes formed thereon.

More specifically, the above rectangular film test specimen was formed into a cylindrical shape having a length of 20.3 cm. The thus formed cylindrical film was fixedly attached at one end thereof to an outer periphery of a disk-shaped fixed head of the tester and at the other end thereof to an outer periphery of a disk-shaped movable head of the tester. The movable head was moved by 8.9 cm towards the fixed head along a common axis of both the heads opposed in parallel to each other (an initial distance between the movable and fixed heads: 17.8 cm) while rotating 440° during the movement, and then straightly moved by 6.4 cm towards the fixed head without rotation thereof. Thereafter, the above movement of the movable head was reversed to return to the initial position to thereby complete one cycle of the flex test. The film test specimen was continuously subjected to 3000 cycles of the flex test at a rate of 40 cycles per min. Thereafter, the film test specimen was examined to count the number of pinholes formed on its portion having an area of 17.8 cm x 27. 9 cm (7 inch x 11 inch = 77 inch² = 496 cm²) except for the opposite end portions fixed to the respective outer peripheries of the fixed and movable heads using a pinhole tester "TRD Model" available from Sanko Electronic Laboratory Co., Ltd., while applying a voltage of 1 kV thereto.

### 3) Interlaminar Peel Strength

The interlaminar peel strength was measured using a tensile tester "AUTOGRAPH AG-5" available from Shimadzu Corporation. The measurement was conducted using a film having a width of 15 mm as a sample for evaluation at a peel rate of 20 mm/min by a T-peel testing method.

### 4) Breaking Strength Before Retort Treatment

The respective polyamide-based biaxially stretched laminated films (hereinafter referred merely as a "laminated film") obtained by the methods described in the following Examples and Comparative Examples were cut along a width direction thereof to prepare a test specimen having a length of 50 mm and a width of 15 mm. The thus obtained test specimen was subjected to tensile test at a pulling rate of 50 mm/min in a lateral stretch direction of the laminated film at a temperature of 23°C and a relative humidity of 50% using a tensile tester "AUTOGRAPH DSS-100" available from Shimadzu Corporation , to measure a tensile strength thereof at break thereof.

### 5) Rate (%) of Retention of Breaking Strength After Retort Treatment

### (1) Hydrothermal Treatment (Retort Treatment)

The respective laminated films obtained by the methods described in the following Examples and Comparative Examples were cut to prepare a film test specimen of 200 mm square. The thus obtained film test specimen was fixed at an entire peripheral portion thereof onto a mold having an opening of 100 mm square and a silicone rubber packing material extending along a whole periphery of the mold. The film test specimen thus fixed onto the mold was placed on a bottom of a pressure retorting vessel "Ultra-Accelerated Life Testing Apparatus PL-30AeRIII" available from HIRAYAMA MANUFACTURING CORPORATION, through a basket previously disposed upside down on the bottom, and water was poured into the retorting vessel so as not to immerse the film therein. The retorting vessel was closed by a lid, and then heated to 120°C (gauge pressure: 0.118 MPa (1.2 kg/cm²)) and to 130°C (gauge pressure: 0.196 MPa (2.0 kg/cm²)) while allowing air to remain therein. The interior of the retorting vessel was held under the above condition for 30 min, and then cooled to 80°C. Thereafter, the lid was removed from the retorting vessel to take out the film therefrom. After wiping off water, the film test specimen was subjected to humidity conditioning at a temperature of 23°C and a relative humidity of 50% for 24 h.

### (2) Measurement of Breaking Strength

The breaking strength of the film test specimen subjected to the above hydrothermal treatment (retort treatment) was measured by the same method as used for measuring the breaking strength of the film before the retort treatment. The rate of retention of the breaking strength of the film after the retort treatment was calculated from a ratio (%) of a tensile strength of the film after the hydrothermal treatment to that of the film before the hydrothermal treatment as 100.

### 6) Occurrence of Delamination

One surface of the respective laminated films obtained by the methods described in the following Examples and Comparative Examples was subjected to corona treatment to impart thereto a wetting force of 520 µN (52 dyne/cm) as measured by a wet test using a wetting reagent according to JIS-K 6768. The thus corona-treated surface of the laminated film was coated with an isocyanate-based anchor-coat agent "AD-900/AD-RT-10" available from Toyo Morton Co., Ltd., in an amount of 0.4 g/m² as a solid content thereof. After evaporating a solvent from the obtained coating film, a 50 µm-thick polypropylene unstretched film "ZK-93" available from Toray Synthetic Film Co., Ltd., was laminated on the coated film, thereby producing a composite film.

The thus obtained composite film was placed in a pressure retorting vessel "Ultra-Accelerated Life Testing Apparatus PL-30AeRIII" available from HIRAYAMA MANUFACTURING CORPORATION , and water was poured into the retorting vessel until completely immersing the film therein. The retorting vessel was closed by a lid, evacuated to remove air therefrom, and then heated to 130°C (gauge pressure: 0.176 MPa (1.8 kg/cm²)). After this condition was held for 30 min, the retorting vessel was cooled to 80°C and then opened to take out the composite film therefrom and wipe off water from the composite film. The thus treated composite film was observed by naked eyes to ascertain whether or not any delamination between the laminated film and the polypropylene unstretched film occurred.

### EXAMPLE 1

A resin composition for a layer (a) prepared by blending poly-m-xylyleneadipamide (aromatic polyamide (A): "MX-Nylon 6007" available from MITSUBISHI GAS CHEMICAL COMPANY INC.) having a relative viscosity of 2.7 and a polyamide elastomer (a flex/pinhole resistance modifying agent "PEBAX4033" available from Atofina Inc.) with each other at a weight ratio of 95:5, poly-ε-capronamide (aliphatic polyamide (B): "NOVAMID 1022" available from Mitsubishi Engineering - Plastics Corporation) for a layer (b) having a relative viscosity of 3.7, and a resin composition for a layer (c) prepared by blending the aromatic polyamide (A) and the aliphatic polyamide (B) with each other at a weight ratio of 20:80, were separately melted in three 65 mmφ extruders. Further, the aliphatic polyamide (B) for the layer (b) and the mixture of the aromatic polyamide (A) and the aliphatic polyamide (B) for the layer (c) were respectively passed through a distribution block and divided into two halves, and then the respective resin components were introduced into a co-extrusion T-die, and extruded and laminated on each other to obtain a laminated film having a five-layer structure. The thus extruded laminated film was brought into a close contact with a casting roll maintained at 30°C and rapidly cooled, thereby obtaining an unstretched laminated film including about 32 µm-thick outer layers each made of the aliphatic polyamide (B), about 26 µm-thick intermediate layers each made of the mixture of the aromatic polyamide (A), the aliphatic polyamide (B) and the polyamide elastomer, and an about 42 µm-thick inner layer made of the aromatic polyamide (A).

The thus obtained unstretched laminated film was stretched at 60°C at a stretch ratio of 3 times in the longitudinal direction using a roll-type stretching machine. Then, the longitudinally stretched film was fixedly grasped at its ends with tenter clips, stretched at 130°C in a tenter oven at a stretch ratio of 3.5 times in the lateral direction, and then heat-treated at 205°C for 6 s. The thus heat-treated film was trimmed to remove the end portions grasped with the tenter clips therefrom, and the remaining film obtained after the trimming was wound into a roll, thereby obtaining a biaxially stretched laminated film having a whole thickness of about 15 µm and a 5-layer structure of (b)/(c)/(a)/(c)/(b) in which the outer layers (b) each had a thickness of about 3 µm, the intermediate layers (c) each had a thickness of about 2.5 µm and the inner layer (a) had a thickness of about 4 µm. The results of evaluation of the obtained film are shown in Table 1.

### EXAMPLES 2 TO 8 AND COMPARATIVE EXAMPLES 1 TO 3

The same procedure as in Example 1 was repeated except that the layer structure and the resin compositions of the respective layers were varied as shown in Table 1, thereby obtaining biaxially stretched laminated films. The results of evaluation of the thus obtained films are shown in Table 1.

### COMPARATIVE EXAMPLE 4

An oxygen permeability of a commercially available 15 µm-thick biaxially stretched nylon film "Santoneal" available from Mitsubishi Plastics, Inc., was measured to evaluate a flex/pinhole resistance and a transparency thereof. The results are shown in Table 1.

**TABLE 1-1**

| | Examples | | | | | |
|---|---|---|---|---|---|---|
| | 1 | 2 | 3 | 4 | 5 | 6 |
| Compositions of layers (wt%) | | | | | | |
| Layer (a) | | | | | | |
| MX-NY | 95 | 95 | 95 | 95 | 97 | 97 |
| PAE | 5 | 5 | 5 | 5 | 3 | |
| EVA | | | | | | 3 |

| Layer (b) | | | | | | |
|---|---|---|---|---|---|---|
| NY6 | 100 | 100 | 97 | 100 | 100 | 100 |
| PAE | | | 3 | | | |

| Layer (c) | | | | | | |
|---|---|---|---|---|---|---|
| NY6 | 80 | 90 | 85 | 83 | 85 | 85 |
| MX-NY | 20 | 10 | 15 | 14 | 15 | 15 |
| PAE | | | | 3 | | |

| Layer (c') | | | | | | |
|---|---|---|---|---|---|---|
| NY6 | | 80 | | | | |
| MX-NY | | 20 | | | | |
| Layer structure | b/c/a/c/b | b/c/c'/a/c' /c/b | b/c/a/c/b | b/c/a/c/b | b/c/a/c/b | b/c/a/c/b |
| Thicknesses of layers (µm) | 3/2.5/4 /2.3/3 | 2/2/1.5/4 /1.5/2/2 | 3/2.5/4 /2.5/3 | 3/2.5/4 /2.5/3 | 4/1.5/4 /1.5/4 | 3/2.5/4 /2.5/3 |
| Evaluation of film | | | | | | |
| Oxygen permeability [x 10⁻¹⁵ mol/(m²·s·Pa)] | 40 | 40 | 40 | 40 | 43 | 40 |
| Flex/pinhole resistance (number of pinholes per 497 cm²) | 3 | 2 | 1 | 1 | 2 | 2 |
| Interlaminar peel strength (g/15 mm) | 220 | 220 | 220 | 200 | 200 | 200 |

**TABLE 1-2**

| | Examples | | Comparative Examples | | | |
|---|---|---|---|---|---|---|
| | 7 | 8 | 1 | 2 | 3 | 4 |
| Compositions of layers (wt%) | | | | | | |
| Layer (a) | | | | | | |
| MX-NY | 95 | 94 | 97 | 97 | 97 | |
| PAE | | 3 | 3 | 3 | 3 | |
| Ionomer | 5 | | | | | |
| NY6 | | 3 | | | | |

| Layer (b) | | | | | | |
|---|---|---|---|---|---|---|
| NY6 | 100 | 100 | 100 | | 100 | |
| PAE | | | | | | |

| Layer (c) | | | | | | |
|---|---|---|---|---|---|---|
| NY6 | 85 | 85 | | 80 | 60 | |
| MX-NY | 15 | 15 | | 20 | 40 | |
| Layer structure | b/c/a/c/b | b/c/a/c/b | b/a/b | c/a/c | b/c/a/c/b | b |
| Thicknesses of layers (µm) | 3/2.5/4 /2.5/3 | 3/2.5/4 /2.5/3 | 5.5/4/5.5 | 5.5/4/5.5 | 3/2.5/4 /2.5/3 | 15 |

| Evaluation of film | | | | | | |
|---|---|---|---|---|---|---|
| Oxygen permeability [x 10⁻¹⁵ mol/(m²·s·Pa)] | 40 | 40 | 40 | 37 | 37 | 150 |
| Flex/pinhole resistance (number of pinholes per 497 cm²) | 2 | 2 | 1 | 7 | 12 | 1 |
| Interlaminar peel strength (g/15 mm) | 200 | 200 | 100 | 220 | 230 | - |

Meanwhile, symbols used in Table 1 represent the following substances.

MX-NY: aromatic polyamide: poly-m-xylyleneadipamide "MX-Nylon 6007" available from MITSUBISHI GAS CHEMICAL COMPANY INC..

NY6: aliphatic polyamide: poly-ε-capronamide "NOVAMID 1022" available from Mitsubishi Engineering Plastics Co., Ltd.

PAE: flex/pinhole resistance modifying agent: polyamide elastomer "PEBAX4033SA01" available from Atofina Inc.

Ionomer: flex/pinhole resistance modifying agent "Himilane H1652" available from DU PONT - MITSUI POLYCHEMICALS CO.,LTD.

EVA: flex/pinhole resistance modifying agent "NOVATEC EVA LV350" available from Japan Polyethylene Corporation

### REFERENCE EXAMPLE 1

Nylon-6 as a raw aliphatic polyamide for a layer (b') (a blended mixture obtained by blending 99.9 parts by weight of "NOVAMID 1022" available from Mitsubishi Engineering Plastics Co., Ltd., with 0.1 part by weight of N,N'-hexamethylenebis(3,5-di-t-butyl-4-hydroxy-hydrocinnamide) (A) "IRGANOX 1098" as a hindered phenol-based antioxidant available from Ciba Specialty Chemicals Corp., using a tumbler; hereinafter referred to merely as "NY6"), poly-m-xylyleneadipamide as a raw aromatic polyamide for a layer (a) (MXD: "MX-Nylon 6007" available from MITSUBISHI GAS CHEMICAL COMPANY INC.), and a mixture of NY6 and MXD as a raw material for a layer (c) (NY + MXD: weight ratio of NY6/MXD = 85/15), were separately melted in three 65 mmφ extruders. Further, the raw materials for the layers (b') and (c) were respectively passed through a distribution block and divided into two halves, and then the respective resin components were introduced into a co-extrusion T-die, and extruded and laminated on each other to obtain a laminated film having a five layer structure. The thus extruded laminated film was brought into a close contact with a casting roll maintained at 30°C and rapidly cooled, thereby obtaining an unstretched laminated film having a five-layer structure constituted from about 35 µm-thick outer layers [layer (b')] each made of nylon 6 containing N,N'-hexamethylenebis(3,5-di-t-butyl-4-hydroxy-hydrocinnamide), an about 40 µm-thick innermost layer [layer (a)] made of MXD, and about 20 µm-thick intermediate layers [layer (c)] each made of a mixture of NY6 and MXD.

The thus obtained unstretched laminated film was stretched at 50°C at a stretch ratio of 3 times in the longitudinal direction using a roll-type stretching machine. Then, the longitudinally stretched film was fixedly grasped at its ends with tenter clips, stretched 3 times in the lateral direction at 90°C in a tenter oven, and then heat-treated at 200°C for 6 s. The thus heat-treated film was trimmed to remove the end portions grasped with the tenter clips therefrom, and the remaining film as a film product obtained after the trimming was wound into a roll, thereby obtaining a biaxially stretched laminated film having a whole thickness of about 15 µm and a 5-layer structure of (b')/(c)/(a)/(c)/(b') in which the outer layers (b') each had a thickness of about 3.5 µm, the intermediate layers (c) each had a thickness of about 2 µm and the innermost layer (a) had a thickness of about 4 µm.

The thus obtained film was tested to measure an oxygen permeability and breaking strengths before and after the retort treatment by the same method as described above. From the measured values, a rate of retention of the breaking strength after the retort treatment was calculated, and further occurrence of delamination in the film was evaluated.

As a result, it was confirmed that an oxygen permeability of the obtained film was 40 x 10⁻¹⁵ mol/(m²·s·Pa), a breaking strength thereof before the retort treatment was 0.53 N, a rate of retention of the breaking strength after the retort treatment was 99% upon the treatment at 120°C and 98% upon the treatment at 130°C, and the film was free from delamination even after both the treatments at 120°C and 130°C.

From the above results, it was recognized that even after being subjected to the hydrothermal treatments at 120°C and 130°C using an oxygen-containing steam, the polyamide-based laminated film having an outermost layer containing the hindered phenol-based antioxidant exhibited the substantially same breaking strength as that before the hydrothermal treatments, and a composite film of the laminated film with other plastic films was also free from interlaminar peeling between the layers, and further the polyamide-based laminated film had a good gas-barrier property.

### INDUSTRIAL APPLICABILITY

In accordance with the present invention, there is provided a polyamide-based laminated film which is free from interlaminar peeling between the aliphatic polyamide layer and the aromatic polyamide layer, and excellent in various properties such as oxygen gas-barrier property, flex/pinhole resistance, transparency, heat resistance and toughness.

The polyamide-based laminated film of the present invention is excellent in not only oxygen gas-barrier property, but also flex resistance, transparency, heat resistance and toughness and, therefore, can be suitably used as a packaging material for foods, drugs and chemical products which tend to be deteriorated in quality upon exposure to an oxygen gas.

The polyamide-based laminated film of the present invention which includes at least one polyamide layer containing a hindered phenol-based antioxidant can exhibit an excellent oxygen gas-barrier property, and even after being subjected to a high-temperature hydrothermal treatment using an oxygen-containing steam, the film can exhibit the same or substantially same tensile strength as that before the hydrothermal treatment. Further, a composite film obtained by laminating the laminated film with other plastic films through an adhesive is also free from interlaminar peeling therebetween even upon being subjected to hydrothermal treatment. Therefore, the polyamide-based laminated film of the present invention can be suitably used as a packaging film for foods, medical products, and drugs or chemicals which tend to be deteriorated in quality upon exposure to oxygen.

Also, when scraps produced during the film production process are regenerated and reused as a raw material of the laminated films, the aliphatic polyamide and the aromatic polyamide are apt to be mixed with each other, so that the resultant laminated film tends to be deteriorated in oxygen gas-barrier property, flex resistance, etc., which are inherent to the respective raw polyamides, thereby failing to exhibit the aimed functions. On the other hand, in the polyamide-based laminated film of the present invention which includes at least one polyamide layer containing a hindered phenol-based antioxidant, even though the scraps are regenerated and reused therein, the resultant laminated film can maintain a good oxygen-barrier property, a good flex resistance, etc. Thus, according to the present invention, the scraps produced during the film production process such as trimmed end materials can be efficiently recovered and reused, thereby enabling the scraps to be industrially utilized in an effective manner.

## Claims

1. A polyamide-based laminated film with a multi-layered structure including 5 or more layers, comprising (a) an aromatic polyamide layer, (b) an aliphatic polyamide layer and (c) a layer made of a mixture containing an aromatic polyamide and an aliphatic polyamide at a weight ratio of 5:95 to 20:80, said layer (c) being disposed adjacent to the layer (a) and/or the layer (b), and said film having 5 or less pinholes per 497 cm² as measured after subjecting the film to 3000 cycles of repeated flexing operation at a temperature of 23°C and a relative humidity of 50%, using a Gelboflex tester.

2. The polyamide-based laminated film according to claim 1, wherein said film has a multi-layered structure in which the layer (b), the layer (c) and the layer (a) are sequentially laminated on each other in this order.

3. The polyamide-based laminated film according to claim 2, wherein said film has a multi-layered structure in which the layer (b), the layer (c), the layer (a), the layer (c) and the layer (b) are sequentially laminated on each other in this order.

4. The polyamide-based laminated film according to any one of claims 1 to 3, wherein said film comprises two or more layers (c) having different compositions from each other.

5. The polyamide-based laminated film according to any one of claims 1 to 4, wherein the layer (a) contains a flex/pinhole resistance modifying agent in an amount of 0.1 to 10% by weight.

6. The polyaanide-based laminated film according to claim 5, wherein the layer (c) and/or the layer (b) contain a flex/pinhole resistance modifying agent in an amount of 0.1 to 10% by weight.

7. The polyamide-based laminated film according to any one of claims 1 to 6, wherein the film is a monoaxially or multi-axially stretched film which is stretched at a stretch ratio of 2 to 8 times in at least one direction thereof.

8. The polyamide-based laminated film according to claim 7, wherein the film is a biaxially stretched film which is stretched at a stretch ratio of 2.5 to 5 times in each of longitudinal and lateral directions thereof.

9. The polyamide-based laminated film according to any one of claims 1 to 8, wherein the layer (a) is an aromatic polyamide layer containing the aliphatic polyamide in an amount of 0 to 5% by weight.

10. The polyamide-based laminated film according to any one of claims 1 to 9, wherein the layer (b) is an aliphatic polyamide layer containing the aromatic polyamide in an amount of 0 to 5% by weight.

11. The polyamide-based laminated film according to any one of claims 1 to 10, wherein at least one layer of the film is a polyamide-based resin layer containing a hindered phenol-based antioxidant in an amount of 0.01 to 0.5% by weight, and a thickness of the polyamide-based resin layer is 10% or more but less than 80% of a whole thickness of the film.

12. The polyamide-based laminated film according to claim 11, wherein the hindered phenol-based antioxidant is at least one compound selected from the group consisting of N,N'-hexamethylenebis(3,5-di-t-butyl-4-hydroxy-hydrocinnamide), 3,5-di-t-butyl-4-hydroxy-benzylphosphonate-diethyl ester, 1,3,5-trimethyl-2,4,6-tris(3,5-di-t-butyl-4-hydroxy-benzyl)benzene and pentaerythrityl-tetrakis[3-(3,5-di-t-butyl-4-hydroxyphenyl)propionate].

13. The polyamide-based laminated film according to claim 11 or 12, wherein the polyamide-based resin layer containing the hindered phenol-based antioxidant is made of nylon-6 and/or nylon-66.

14. The polyamide-based laminated film according to any one of claims 1 to 13, wherein in addition to the layers (a), (b) and (c), the film further comprises (d) a layer made of a saponified ethylene-vinyl acetate copolymer.
